# EUROPÄISCHE PATENTANMELDUNG

(11) **EP 3 639 945 A1**
(43) Veröffentlichungstag der Anmeldung: **22.04.2020**
(21) Anmeldenummer: 19196957.5
(22) Anmeldetag: 12.09.2019
(51) Int. Cl.: B21J 5/02, H01B 5/02, H01R 43/16, B21F 1/00, H02G 5/00, B60R 16/02

(54) **VERFAHREN ZUM HERSTELLEN EINES DREIDIMENSIONAL GEFORMTEN FLACHLEITERS AUS METALLDRAHT**

(30) Priorität: 17.10.2018 DE 102018217785
(71) Anmelder: VOLKSWAGEN AKTIENGESELLSCHAFT, 38440 Wolfsburg (DE)
(72) Erfinder: Rüsch, Sönke, 34225 Baunatal (DE); Borowski, Andre, 34305 Niedenstein (DE); Koch, Jonas, 34253 Lohfelden (DE); Lerch, Alexander, 34327 Körle (DE)

(57) **Zusammenfassung**

Die Erfindung betrifft ein Verfahren zum Herstellen eines zwei- oder dreidimensional geformten Flachleiters aus Metall, mit den Schritten:
- Bereitstellen eines Drahtstücks (110') mit entsprechender Länge;
- Biegen des Drahtstücks (110'), wobei eine zweidimensionale Form erzeugt wird;
- Flachpressen des gebogenen Drahtstücks (110'), wobei aus dem zweidimensional geformten Drahtstück (110') ein entsprechend zweidimensional geformtes Flachprofil erzeugt wird;
- gegebenenfalls noch Biegen des Flachprofils, wobei aus dem zweidimensional geformten Flachprofil ein dreidimensional geformtes Flachprofil (120) erzeugt wird.

## Beschreibung

Die Erfindung betrifft ein Verfahren zum Herstellen eines zwei- oder dreidimensional geformten Flachleiters aus Metall.

Flachleiter der hier betreffenden Art sind aus Metall bzw. einer Metalllegierung gebildete Bauteile mit einem massiven Flachquerschnitt und werden z. B. in Kraftfahrzeugen als elektrische Verbindungselemente zur Übertragung von elektrischen Strömen, insbesondere im zwei- oder dreistelligen Amperebereich, verwendet (bspw. in der Leistungselektronik oder für den Anschluss elektrischer Verbraucher). Solche Flachleiter werden gelegentlich auch als Stromschienen bezeichnet. Im Gegensatz zu Kabeln, die für gewöhnlich flexibel verlegbar sind, sind solche Flachleiter bzw. Stromschienen starr und weisen einen durch entsprechende Fertigung vorgegebenen, an den jeweiligen Verwendungszweck angepassten zweidimensionalen bzw. ebenen oder auch dreidimensionalen bzw. räumlichen Verlauf auf.

Zweidimensional geformte Flachleiter können bspw. aus einem Metallblech bzw. einer Metallplatte durch Ausschneiden mittels Scherschneiden (Ausstanzen), Laserstrahlschneiden, Wasserstrahlschneiden oder dergleichen hergestellt werden. Dabei entsteht jedoch viel Abfall (Verschnitt). Außerdem bilden sich ungünstige Schnittgrate am Werkstück aus. Das Laser- und Wasserstrahlschneiden haben zudem lange Taktzeiten.

Die DE 10 2013 017 748 A1 beschreibt ein dreidimensional geformtes Verbindungselement. Es ist aus einem einstückigen Profilkörper mit vorzugsweise zumindest näherungsweise rechteckigem Querschnitt gefertigt. Ein ursprünglich gerader Profilkörper mit zuvor ermittelter Länge wird mehrfach in unterschiedlicher Weise umgeformt, sodass der Profilkörper verteilt über seine Längenausdehnung eine Mehrzahl unterschiedlicher Umformungen, wie Biegungen, Hochkantbiegungen oder Tordierungen aufweist. Die Umformungen können der Reihe nach von einem Ende zum anderen Ende des Profilkörpers mittels entsprechend ausgebildeter Biegevorrichtungen ausgeführt werden. Die unterschiedlichen Umformungen können nacheinander an entsprechend ausgerüsteten Umformstationen vorgenommen werden.

Der Erfindung liegt die Aufgabe zugrunde, ein Verfahren zum Herstellen eines zwei- oder dreidimensional geformten Flachleiters anzugeben, das wenigstens einen mit dem Stand der Technik einhergehenden Nachteil nicht oder zumindest nur vermindert aufweist und das insbesondere auch großserientauglich ist.

Die Aufgabe wird gelöst durch das erfindungsgemäße Verfahren mit den Merkmalen des Patentanspruchs 1. Vorteilhafte Weiterbildungen und Ausgestaltungen der Erfindung ergeben sich aus den abhängigen Patentansprüchen, der nachfolgenden Erfindungsbeschreibung und den Figuren der Zeichnung.

Das erfindungsgemäße Verfahren (Prozesskette) zum Herstellen eines zwei- oder dreidimensional geformten Flachleiters aus Metall umfasst zumindest folgende Schritte:
- Bereitstellen eines Drahtstücks mit entsprechender Länge;
- Biegen des Drahtstücks, wobei eine zweidimensionale Form erzeugt wird;
- Flachpressen bzw. Flachdrücken des gebogenen Drahtstücks, wobei aus dem zweidimensional geformten Drahtstück ein entsprechend zweidimensional geformtes Flachprofil erzeugt wird;
- gegebenenfalls noch Biegen des Flachprofils, wobei aus dem zweidimensional geformten Flachprofil ein dreidimensional geformtes Flachprofil erzeugt wird, falls der herzustellende Flachleiter eine dreidimensionale Form hat bzw. aufweisen soll.

Bei dem erfindungsgemäßen Verfahren wird der Flachleiter aus einem Drahtstück, das zunächst umgeformt und danach flachgedrückt bzw. flachgepresst wird, hergestellt. Das Drahtstück wird mit entsprechender Länge bereitgestellt, d. h., die erforderliche Länge des Drahtstücks wird unter Berücksichtigung der vorzunehmenden Umformungen ermittelt, sodass später insbesondere kein Beschnitt mehr erforderlich ist. Das Drahtstück ist massiv, d. h. aus einem Vollmaterial gebildet, und weist bevorzugt einen Rundquerschnitt auf. Der Durchmesser liegt bevorzugt in einem Bereich von 6 mm bis 10 mm. Bevorzugt wird das Drahtstück in einem vorausgehenden Schritt durch Abschneiden bzw. Ablängen, insbesondere durch Scherschneiden (Abscheren), von einem Drahthalbzeug, das bspw. von einem Coil abgezogen wird, erzeugt. Das Abschneiden kann mittels eines Schneidwerkzeugs erfolgen. Bei dem Drahthalbzeug kann es sich auch um Stangenware handeln.

Durch Biegen (Drahtbiegen) des Drahtstücks, wobei das Drahtstück an mehreren Biegestellen je nach vorgesehener Endform gebogen wird (Mehrfachbiegen), wird eine zweidimensionale Form erzeugt, womit insbesondere die finale zweidimensionale Endform des herzustellenden Flachleiters oder eine ebene Abwicklung der finalen dreidimensionalen Endform gemeint ist. Bevorzugt ist vorgesehen, dass das Biegen des Drahtstücks zur Erzeugung der zweidimensionalen Form in einem Arbeitsgang mittels eines Gesenkbiegewerkzeugs (Drahtbiegegesenk) erfolgt. Das Gesenkbiegewerkzeug ist bevorzugt in einer Presse eingebaut, sodass das Biegen des Drahtstücks in einem Hub (Presshub) erfolgt. Im Gegensatz zu einem sogenannten "freien Biegen" wird das Drahtstück beim Gesenkbiegen in einer geschlossenen, das Drahtstück aufnehmenden Gravur (Kavität) umgeformt. Die Umformung kann unter Verwendung eines festen oder flüssigen Schmierstoffs erfolgen. Bevorzugt ist vorgesehen, dass beim Biegen des Drahtstücks, insbesondere bei Verwendung eines mit entsprechender Gravur ausgebildeten Gesenkbiegewerkzeugs, an einzelnen kritischen Biegestellen oder auch an allen Biegestellen eine gezielte Durchmesserreduzierung herbeigeführt wird. Dadurch ergibt sich ein optimierter Materialfluss beim anschließenden Flachdrücken.

Durch anschließendes Flachpressen bzw. Flachdrücken wird aus dem zuvor zweidimensional gebogenen Drahtstück ein entsprechend zweidimensional geformtes Flachprofil erzeugt. Dies ist insbesondere so zu verstehen, dass beim Flachpressen der zuvor erzeugte zweidimensionale Längsverlauf des Drahtstücks unverändert bleibt und nur der Querschnitt gestaucht wird, wobei aus dem ursprünglichen Drahtquerschnitt (insbesondere ein Rundquerschnitt, s. o.) insbesondere ein zumindest näherungsweise rechteckiger Querschnitt geformt wird, der bezüglich des Längsverlaufs insbesondere gleichbleibend ausgebildet ist. Die Bezeichnung "Flachprofil" bedeutet insbesondere, dass das Seitenverhältnis des Rechteckquerschnitts deutlich > 1 ist und bevorzugt in einem Bereich von 4:1 bis 10:1 liegt, wobei das erzeugte Flachprofil eine bevorzugte Dicke (dies entspricht der kürzeren Querschnittsseite) von 2 mm bis 5 mm aufweisen kann.

Bevorzugt ist vorgesehen, dass das Flachpressen des zuvor gebogenen Drahtstücks in einem Arbeitsgang mittels eines Gesenkschmiedewerkzeugs (Drahtschmiedegesenk) erfolgt. Das Gesenkschmiedewerkzeug ist bevorzugt in einer Presse eingebaut, sodass das Schmieden des Drahtstücks in einem Hub (Presshub) erfolgt. Im Gegensatz zu einem sogenannten "Freiformschmieden" wird das Drahtstück beim Gesenkschmieden in einer geschlossenen, das Drahtstück vollständig aufnehmenden Gravur (Kavität) umgeformt, insbesondere derart, dass kein Grat entsteht (sogenanntes Gesenkschmieden ohne Grat). Die Umformung kann unter Verwendung eines festen oder flüssigen Schmierstoffs erfolgen.

Bevorzugt ist aber auch vorgesehen, dass das Flachpressen des zuvor gebogenen Drahtstücks in zwei (oder mehr) Arbeitsgängen bzw. Teilschritten mit zwei (oder mehr) Gesenkschmiedewerkzeugen erfolgt, wobei diese beiden Arbeitsgänge bevorzugt unmittelbar aufeinanderfolgend bzw. nacheinander ausgeführt werden. Dabei ist insbesondere vorgesehen, dass im ersten Arbeitsgang im ersten Gesenkschmiedewerkzeug die Biegestellen (Krümmungsabschnitte) flachgepresst werden und dass dann im zweiten Arbeitsgang im zweiten Gesenkschmiedewerkzeug die restlichen Abschnitte (Geradabschnitte) flachgepresst werden.

Anschließend kann aus dem zweidimensional geformten Flachprofil durch Biegen noch ein dreidimensional geformtes Flachprofil erzeugt werden. Bevorzugt ist vorgesehen, dass dieses Biegen (3D-Biegen) in einem Arbeitsgang mittels eines geeigneten Biegewerkzeugs erfolgt. Das Biegewerkzeug ist bevorzugt in einer Presse eingebaut, sodass das Biegen des Flachprofils in einem Hub (Presshub) erfolgt.

Das Flachprofil kann, insbesondere an seinen Enden, gelocht werden, um Befestigungslöcher zu erzeugen. Das Lochen kann nach dem Flachpressen mittels eines Lochwerkzeugs erfolgen. Das Lochen kann gegebenenfalls auch schon beim Flachpressen erfolgen, indem bspw. das Gesenkschmiedewerkzeug mit entsprechenden Lochstempeln ausgestattet ist. Das Lochen kann auch erst nach dem 3D-Biegen erfolgen.

Die einzelnen Verfahrensschritte des erfindungsgemäßen Verfahrens können nacheinander in entsprechenden Werkzeugen ausgeführt werden, die alle in derselben Presse eingebaut sind, wobei das Werkstück im Pressentakt (automatisch) zum jeweils nächsten Werkzeug (Station) weitertransportiert wird. Die benötigten Werkzeuge bilden also eine Folgeverbundwerkzeuggruppe oder können auch in einem sogenannten Folgeverbundwerkzeug zusammengefasst sein. Somit ist nur eine Presse erforderlich. Ferner wird die Herstellung großer Stückzahlen in vergleichsweise geringer Fertigungszeit ermöglicht.

Für die Herstellung des Flachleiters wird als Metall bevorzugt ein Reinkupfer, eine Kupferlegierung (hierzu gehören auch Messing- und Bronzelegierungen) oder eine Aluminiumlegierung verwendet. Es kann aber auch Stahl oder ein anderes metallisches Material verwendet werden. Als Ausgangsmaterial können Drahthalbzeuge (s. o.) oder vorgefertigte Drahtstücke, die aus dem jeweiligen Metall gebildet sind, verwendet werden.

Bevorzugt ist vorgesehen, dass zumindest das Biegen und das Flachpressen des Drahtstücks bei Raumtemperatur erfolgen. D. h., das Werkstück wird nicht erwärmt, sondern im kalten Zustand bearbeitet. Es kann allerdings auch vorgesehen sein, dass zumindest das Biegen und das Flachpressen des Drahtstücks bei erhöhten Temperaturen erfolgen. D. h., das Werkstück wird, insbesondere induktiv, erwärmt (bei Reinkupfer und Kupferlegierungen bspw. auf 300 °C bis 500° C) und im warmen Zustand bearbeitet.

Das bereitgestellte Drahtstück kann mit einer elektrischen Isolationsschicht versehen sein und mit dieser Isolationsschicht so bearbeitet werden, dass diese funktionsfähig erhalten bleibt. Die elektrische Isolationsschicht kann bereits auf das Drahthalbzeug aufgebracht sein. Alternativ kann nach dem Flachpressen oder gegebenenfalls nach dem 3D-Biegen noch eine elektrische Isolationsschicht aufgebracht werden.

Ein erfindungsgemäß hergestellter Flachleiter ist als Flachprofil einstückig und massiv, also weder hohl noch aus Einzeldrähten, sondern aus Vollmaterial, gebildet. Das erfindungsgemäße Verfahren bietet den Vorteil, dass kein Stanzabfall und Verschnitt anfallen, also eine nahezu 100%ige Materialausnutzung gegeben ist. Ferner weist das erfindungsgemäße Verfahren nur wenige und vollautomatisierbare Fertigungsschritte auf und ist somit auch für die Großserienfertigung bestens geeignet. Es ergeben sich sowohl Umwelt- als auch Kostenvorteile.

Die Erfindung wird nachfolgend beispielhaft und in nicht einschränkender Weise mit Bezug auf die Zeichnung näher erläutert. Die in den schematischen Figuren der Zeichnung gezeigten und/oder nachfolgend erläuterten Merkmale können, auch unabhängig von konkreten Merkmalskombinationen, allgemeine Merkmale der Erfindung sein und die Erfindung entsprechend weiterbilden.
- Fig. 1: zeigt das Abschneiden eines Drahtstücks.
- Fig. 2: zeigt das Biegen des Drahtstücks.
- Fig. 3: zeigt das Flachdrücken des gebogenen Drahtstücks.
- Fig. 4: zeigt den hergestellten Flachleiter.

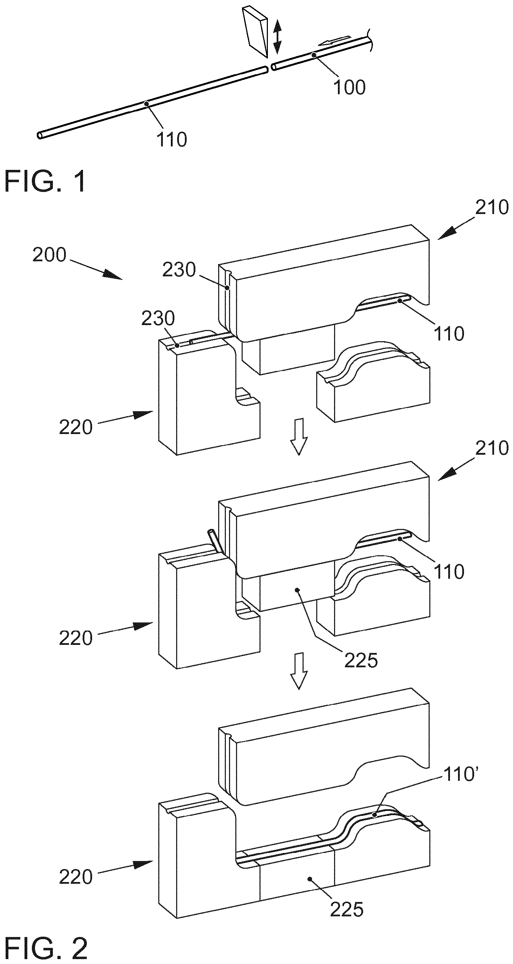

In Fig. 1 ist das Erzeugen eines Drahtstücks 110 durch Abschneiden von einem Drahthalbzeug 100, das bspw. von einem Coil abgezogen wird, veranschaulicht. Das gerade Drahtstück 110 weist einen Rundquerschnitt auf. Anschließend wird das Drahtstück 110, wie in Fig. 2 veranschaulicht, in einem Gesenkbiegewerkzeug 200 umgeformt. Dabei wird das Drahtstück 110 an mehreren Biegestellen unterschiedlich gebogen, sodass mehrere, in einer Ebene liegende Krümmungsabschnitte (Biegestellen) und Geradabschnitte entstehen. Das Gesenkbiegewerkzeug 200 weist ein Obergesenk bzw. Oberwerkzeug 210 und ein Untergesenk bzw. Unterwerkzeug 220 auf, die mit einer an die Drahtkontur angepassten Gravur 230 ausgebildet sind. Das Biegen erfolgt durch Absenken des Obergesenks 210. Das Untergesenk 220 ist segmentiert aufgebaut und weist ein mittleres Segment 225 auf, welches das Drahtstück 110 vor dem Biegen gegen das Obergesenk 210 fixiert.

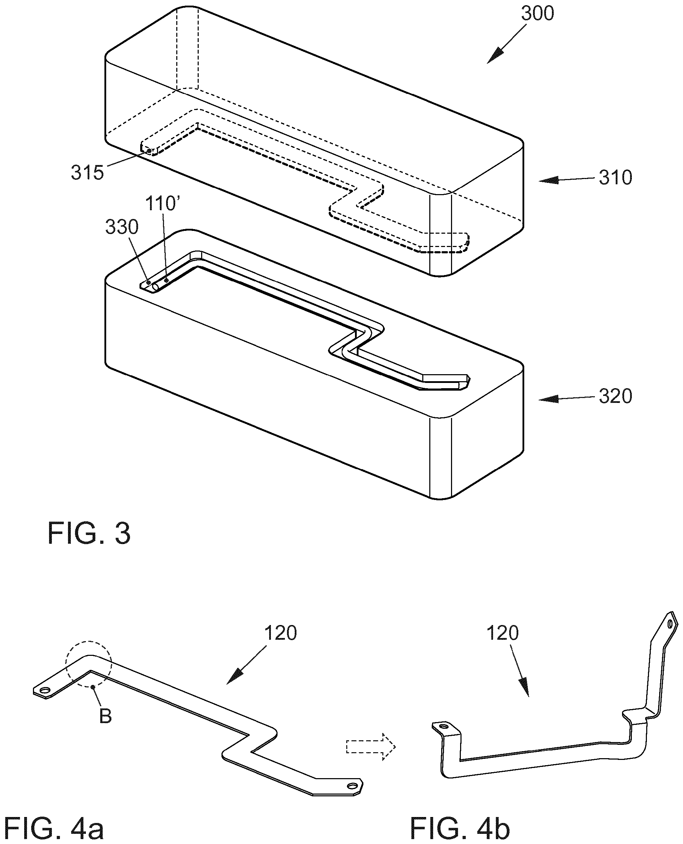

Nach diesem Drahtbiegen wird das gebogene Drahtstück 110' in einem Gesenkschmiedewerkzeug 300 flachgepresst, wie in Fig. 3 veranschaulicht. Das Gesenkschmiedewerkzeug 300 weist ein Obergesenk bzw. Oberwerkzeug 310 und ein Untergesenk bzw. Unterwerkzeug 320 auf. Das Untergesenk 320 ist mit einer die Endform vorgebenden Gravur 330 ausgebildet, in die das gebogene Drahtstück 110' eingelegt und durch Absenken des Obergesenks 310 flachgepresst wird. Das Obergesenk 310 weist hierzu einen stempelartigen Vorsprung 315 auf, der in die Gravur 330 eintaucht und das Drahtstück 110' flachdrückt, wobei es zu einem Materialfluss kommt, bei dem sich der metallische Drahtwerkstoff in der nun geschlossenen Gravur 330 verteilt und ohne Gratbildung deren Kontur annimmt. Dabei wird der Rundquerschnitt des Drahtstücks 110' zu einem Rechteckquerschnitt umgeformt, sodass sich ein bandartiges Flachprofil ergibt, welches den Flachleiter bildet.

Das Flachprofil wird anschließend noch an den Enden gelocht. Fig. 4a zeigt den auf diese Weise hergestellten zweidimensional geformten Flachleiter 120. Um an kritischen Biegestellen B den Materialfluss zu optimieren und insbesondere Materialanhäufung zu vermeiden, kann bereits beim Biegen des Drahtstücks 110 im Gesenkbiegewerkzeug 200 (siehe Fig. 2) an diesen Biegestellen gezielt eine Durchmesserreduzierung erzeugt werden, wie oben beschrieben.

Aus dem in Fig. 4a gezeigten zweidimensional geformten Flachleiter 120 kann nun durch Biegen des Flachprofils noch ein dreidimensional geformter Flachleiter 120 erzeugt werden, wie beispielhaft in Fig. 4b gezeigt. Bei dem in Fig. 4a gezeigten Flachprofil handelt es sich somit um eine ebene Abwicklung der in Fig. 4b gezeigten dreidimensionalen Endform. Aus dem Drahtstück 110 wird also zunächst eine zweidimensionale Abwicklung der dreidimensionalen Endform erzeugt und diese dann durch Biegen in die dreidimensionale Endform gebracht.

### Bezugszeichenliste

- 100: Drahthalbzeug
- 110: Drahtstück
- 110': gebogenes Drahtstück
- 120: Flachleiter
- 200: Gesenkbiegewerkzeug
- 210: Obergesenk
- 220: Untergesenk
- 225: Segment
- 230: Gravur
- 300: Gesenkschmiedewerkzeug
- 310: Obergesenk
- 315: Vorsprung
- 320: Untergesenk
- 330: Gravur
- B: Biegestelle

## Patentansprüche

1. Verfahren zum Herstellen eines zwei- oder dreidimensional geformten Flachleiters (120) aus Metall, mit den Schritten:
- Bereitstellen eines Drahtstücks (110) mit entsprechender Länge;
- Biegen des Drahtstücks (110), wobei eine zweidimensionale Form erzeugt wird;
- Flachpressen des gebogenen Drahtstücks (110'), wobei aus dem zweidimensional geformten Drahtstück (110') ein entsprechend zweidimensional geformtes Flachprofil (120) erzeugt wird;
- gegebenenfalls Biegen des Flachprofils (120), wobei aus dem zweidimensional geformten Flachprofil (120) ein dreidimensional geformtes Flachprofil (120) erzeugt wird.

2. Verfahren nach Anspruch 1, mit dem vorausgehenden Schritt:
- Erzeugen des Drahtstücks (110) durch Abschneiden von einem Drahthalbzeug (100).

3. Verfahren nach Anspruch 1 oder 2,
**dadurch gekennzeichnet, dass**
das Biegen des Drahtstücks (110) in einem Arbeitsgang mit einem Gesenkbiegewerkzeug (200) erfolgt.

4. Verfahren nach einem der vorausgehenden Ansprüche 1 bis 3,
**dadurch gekennzeichnet, dass**
das Flachpressen des gebogenen Drahtstücks (110') in einem Arbeitsgang mit einem Gesenkschmiedewerkzeug (300) erfolgt.

5. Verfahren nach einem der vorausgehenden Ansprüche 1 bis 3,
**dadurch gekennzeichnet, dass**
das Flachpressen des gebogenen Drahtstücks (110') in zwei Arbeitsgängen mit zwei Gesenkschmiedewerkzeugen erfolgt, wobei insbesondere vorgesehen ist, dass im ersten Arbeitsgang im ersten Gesenkschmiedewerkzeug die Biegestellen (B) flachgepresst werden und dann im zweiten Arbeitsgang im zweiten Gesenkschmiedewerkzeug die restlichen Abschnitte flachgepresst werden.

6. Verfahren nach einem der vorausgehenden Ansprüche, ferner aufweisend den Schritt:
- Lochen des Flachprofils (120) zur Erzeugung von Befestigungslöchern.

7. Verfahren nach einem der vorausgehenden Ansprüche,
**dadurch gekennzeichnet, dass**
die Schritte nacheinander in Werkzeugen ausgeführt werden, die in derselben Presse eingebaut sind, wobei das Werkstück im Pressentakt zum jeweils nächsten Werkzeug weitertransportiert wird.

8. Verfahren nach einem der vorausgehenden Ansprüche,
**dadurch gekennzeichnet, dass**
das erzeugte Flachprofil (120) einen Rechteckquerschnitt aufweist, mit einem Seitenverhältnis im Bereich von 4:1 bis 10:1.

9. Verfahren nach einem der vorausgehenden Ansprüche,
**dadurch gekennzeichnet, dass**
das Biegen und das Flachpressen des Drahtstücks (110) bei Raumtemperatur erfolgen.

10. Verfahren nach einem der vorausgehenden Ansprüche,
**dadurch gekennzeichnet, dass**
das bereitgestellte Drahtstück (110) mit einer elektrischen Isolationsschicht versehen ist.
